# FASCICULE DE BREVET EUROPEEN

(11) **EP 1 457 023 B1**
(45) Date de publication et mention de la délivrance du brevet: **19.10.2005**
(21) Numéro de dépôt: 02801101.3
(22) Date de dépôt: 05.12.2002
(51) Int. Cl.: H04L 29/06, H04L 12/18

(54) **PROCEDE DE TRANSMISSION D'OBJETS ENTRE UN SERVEUR ET UN TERMINAL CLIENT METTANT EN OEUVRE UNE GESTION DE CACHE**
VERFAHREN ZUR ÜBERTRAGUNG VON DATENOBJEKTEN VON EINEM SERVER ZU EINEM CLIENT-TERMINAL, DAS SICH EINER VERWALTUNG DES CACHE BEDIENT
METHOD FOR TRANSMITTING OBJECTS BETWEEN A SERVER AND A CLIENT TERMINAL USING CACHE MANAGEMENT, CORRESPONDING TRANSMISSION, SERVER AND TERMINAL.

(30) Priorité: 20.12.2001 FR 0116632
(43) Date de publication de la demande: 15.09.2004
(73) Titulaire: FRANCE TELECOM, 75015 Paris (FR)
(72) Inventeur: AUBAULT, Olivier, F-35700 Rennes (FR)
(74) Mandataire: Bioret, Ludovic
(86) Numéro de dépôt international: PCT/FR2002/004199
(87) Numéro de publication internationale: WO 2003/055141

(56) Documents cités:
- WO-A-01/58069
- US-A- 5 956 039
- US-A- 6 026 474
- US-A- 6 098 064

## Description

Le domaine de l'invention est celui de la transmission de données au travers de réseaux de communication. Plus précisément, l'invention concerne la transmission de données destinées à être visualisées de manière interactive, et la gestion de caches correspondante.

Les développements extraordinaires des réseaux de communication permettent aujourd'hui aux utilisateurs de visualiser des modèles de type images, textures, modèles géométriques ou scènes 3D par exemple, de manière interactive, et en temps réel. Classiquement, les utilisateurs se connectent, via un terminal adapté, à un serveur distant, qui centralise dans une base de données l'ensemble des informations nécessaires à l'utilisateur pour une telle visualisation (on notera que, bien que l'on emploie ici le terme "visualisation", de telles informations peuvent inclure des données de toutes natures, et notamment de type son, de type paginées, etc.).

Les utilisateurs peuvent ainsi accéder à de nouvelles applications, du type leur permettant par exemple de se déplacer dans un environnement virtuel 3D, comme un musée virtuel, un relief de terrain, ou encore un concert de musique classique. Dans le cadre de ces applications, le serveur envoie donc au client les informations nécessaires à la reconstruction de la scène globale, ainsi que les informations relatives aux différents objets de la scène, qui entrent dans le champ de vision (ou dans le champ d'écoute) de l'utilisateur, en fonction de sa position dans la scène.

L'invention s'applique notamment, mais non exclusivement, à une telle transmission, ainsi qu'au stockage, en vue par exemple d'une utilisation future, d'informations de tout type, accessibles par un utilisateur via un serveur de données.

En effet, afin de permettre une visualisation en temps réel (telle que décrite ci-dessus) d'une scène ou d'une vidéo par exemple, on associe généralement au terminal de l'utilisateur un cache, dans lequel sont stockées toutes les informations nécessaires à la reproduction de la scène, en temps réel, par le terminal.

Un tel cache mémorise classiquement des données dites "passées", c'est-à-dire des données qui ont déjà été utilisées par le terminal pour reproduire une scène ou une image, mais qui pourront peut-être être réutilisées ultérieurement, en fonction des besoins de l'utilisateur. Il stocke également les données dites "présentes", c'est-à-dire les données en cours d'utilisation par le terminal, et enfin éventuellement des données dites "futures", qui pourront être nécessaires au terminal dans un avenir proche, et qui résultent d'une anticipation du serveur sur les besoins de l'utilisateur.

Comme on le comprendra aisément, le volume d'informations que le serveur doit transmettre d'une part, et qui doivent être gérées dans le cache d'autre part, est considérable, notamment dans le cas où l'utilisateur souhaite visualiser des données de très grande taille, comme par exemple des scènes tridimensionnelles très vastes.

Pour résoudre les problèmes afférents au volume élevé de données échangées entre le client et le serveur correspondant, on a envisagé d'introduire plusieurs méthodes de traitement, et notamment :
- un algorithme de remplacement, qui permet, lorsque le taux de remplissage du cache est élevé, de choisir les- données stockées à supprimer pour libérer de l'espace mémoire ;
- une méthode de transmission, qui régit le choix, par le serveur, des données à envoyer au client, ainsi que le mode de transmission de ces données.

On connaît à ce jour deux méthodes principales de transmission, permettant de créer un dialogue entre le client et le serveur, et indiquant à ce dernier les informations à transmettre au client.

La première méthode de transmission connue est notamment décrite dans le document "Multi-Resolution Model Transmission in Distributed Virtual Environments" (en français "Transmission de modèles multi-résolution en environnements virtuels distribués") par J. H. P. Chim et al., VRST'98, p. 25-34.

Selon cette première méthode, l'envoi, par le serveur, de données que le client souhaite visualiser se décompose en quatre étapes successives :
- au cours d'une première étape, le terminal du client transmet au serveur une information relative à la position de l'utilisateur dans la scène à visualiser ;
- sur réception de cette information de position, le serveur calcule tous les objets nécessaires à l'utilisateur, et, au cours d'une deuxième étape, lui transmet la liste des couples <O, L₀> d'objets nécessaires, où O est une référence de l'objet, et L₀ un niveau de détail correspondant ;
- le terminal client choisit alors, parmi cette liste, et en fonction du contenu de son cache, les couples correspondant aux objets qu'il souhaite recevoir, et transmet au serveur le résultat de son choix, au cours d'une troisième étape ;
- au cours d'une quatrième étape, le serveur transfère les objets demandés par le terminal du client.

Un inconvénient de cette technique de l'art antérieur est qu'à chaque fois que la position de l'utilisateur dans la scène est modifiée, et donc à chaque fois que le serveur doit envoyer un ou plusieurs nouveaux objets à l'utilisateur, deux échanges complets de données, sous forme d'allers-retours, sont nécessaires entre le serveur et le terminal client, avant que le ou les objet(s) nécessaire(s) ne devienne(nt) accessible(s) à l'utilisateur, via sa mémoire cache.

Une telle technique n'est donc pas adaptée à la transmission de données au travers des réseaux de communication qui présentent une grande latence : en effet, pour de tels réseaux, cette technique ne permet pas une visualisation en temps réel des données transmises par le serveur.

Une deuxième méthode de transmission connue est décrite dans l'article "On Caching and Prefetching of Virtual Objects in Distributed Virtual Environments" (en français "Gestion de cache et préextraction d'objets virutels en environnements virtuels distribués") par J. H. P. Chim et al., Proceedings of the sixth ACM international conference on Multimedia, 1998, pages 171-180.

Selon cette seconde méthode, qui est plus particulièrement adaptée à la transmission d'objets codés progressivement, le terminal client transmet au serveur, à chacun de ses mouvements dans la scène visualisée, une information sur sa position, ainsi qu'une information relative au contenu de son cache, sous la forme de couples <O, L₀>. A nouveau, O représente une référence de l'objet contenu dans le cache du client, et L₀ indique au serveur le niveau de détail associé à cet objet.

Le serveur calcule alors, en fonction de la position de l'utilisateur dans la scène, l'ensemble des objets visuellement pertinents, vérifie si ces objets sont ou non déjà présents dans le cache de l'utilisateur, et transmet au client l'ensemble des objets manquants.

Selon cette méthode, un seul aller-retour entre le client et le serveur est donc nécessaire pour transférer au client les données nécessaires à la visualisation de la scène.

Cependant, un inconvénient de cette technique de l'art antérieur est qu'elle est très consommatrice en termes de ressources réseau, et notamment en termes de bande passante. En effet, à chaque mouvement de l'utilisateur dans la scène, le terminal client transfère au serveur l'intégralité des informations relatives au contenu de son cache (c'est-à-dire l'ensemble des couples <O, L₀> correspondant aux objets contenus dans son cache).

Dans le cas de la visualisation de scènes très vastes, la quantité d'informations transmises du terminal client au serveur est donc très élevée, ce qui est particulièrement pénalisant dans le cadre des réseaux de communication à bas débit.

L'invention a notamment pour objectif de pallier ces inconvénients de l'art antérieur.

Plus précisément, un objectif de l'invention est de fournir une technique de transmission, d'un serveur vers un terminal client, d'informations nécessaires à une visualisation en temps réel de données de grande taille, en minimisant les transferts entre le serveur et le terminal client.

Un autre objectif de l'invention est de mettre en oeuvre une telle technique de transmission de données qui soit simple et peu coûteuse à mettre en oeuvre.

L'invention a encore pour objectif de fournir une telle technique de transmission de données à travers un réseau de communication, qui soit adaptée à tout type de réseau, et notamment aussi bien aux réseaux présentant une grande latence qu'aux réseaux à bas débit.

L'invention a également pour objectif de mettre en oeuvre une telle technique de transmission de données qui permette d'éviter les redondances de transmission de données du serveur au terminal client.

Encore un objectif de l'invention est de proposer une telle technique de transmission de données qui permette de supprimer, ou à tout le moins de réduire, les requêtes de données émises par le terminal client à destination du serveur.

Ces objectifs, ainsi que d'autres qui apparaîtront par la suite, sont atteints à l'aide d'un procédé de transmission de données, appelées objets, via au moins un réseau de communication, entre un serveur et au moins un terminal client, au moins une mémoire cache, destinée à stocker au moins certains desdits objets transmis par ledit serveur, étant associée, au sein dudit réseau, à l'un au moins desdits terminaux clients.

Selon l'invention, on gère, en amont desdits terminaux clients, au moins une liste d'objets présents dans ladite mémoire cache associée à l'un desdits terminaux clients, afin de limiter les échanges d'informations relatives au contenu de ladite mémoire cache entre ledit terminal client et ledit serveur.

Ainsi, l'invention repose sur une approche tout à fait nouvelle et inventive de la gestion des mémoires caches. Notamment, l'invention repose sur l'idée innovante et avantageuse de maintenir, en amont d'un terminal client, une liste, accessible au serveur de données, représentative du contenu d'un cache associé au client. Cette solution permet donc au serveur de connaître à tout moment le contenu du cache du client, sans que ce contenu ne soit dupliqué au niveau du serveur. L'invention propose donc une solution qui, bien que peu coûteuse en termes de ressources, et notamment de mémoire, pour le serveur, permet de réduire considérablement le volume d'informations échangées entre le serveur et le client, lors de la visualisation d'une scène ou d'un ensemble d'objets par le client. Une telle solution est particulièrement avantageuse pour les terminaux clients de capacité réduites, ou pour les réseaux de communication de performances limitées.

On connaît déjà plusieurs techniques, décrites notamment dans les documents de brevet US 6 098 064 et US 5 956 039, prévoyant une gestion de listes d'objets ou de documents, dans le cadre d'échanges entre un serveur et un terminal client. Cependant, ces listes diffèrent fortement, tant en termes de formes que de fonctions, de la liste de la présente invention.

Ainsi, le document de brevet US 6 098 064 décrit une technique permettant de déterminer quels sont les documents (notamment sous forme de pages web) qu'il convient de stocker dans la mémoire cache d'un ordinateur, en fonction de la probabilité que ces documents soient requis à l'avenir par un utilisateur. Selon cette technique, on gère une liste de besoins répertoriant les documents présents qui sont soit dans la mémoire cache du terminal, soit susceptibles d'intéresser à l'avenir son utilisateur.

Cette liste n'a pas pour fonction, et ne permet pas, contrairement à la liste de la présente invention, de réduire le nombre et/ou le volume des échanges d'informations entre le serveur et le terminal client, lors de la visualisation des documents par le client.

En effet, cette liste de besoins ne permet pas au serveur de savoir avec précision quels sont les documents effectivement présents dans la mémoire cache d'un terminal client donné, et ce, d'autant plus qu'une telle liste de besoins peut être une liste collective, pour un ensemble de terminaux clients connectés au serveur.

Selon la technique de ce document US 6 098 064, lorsqu'un terminal requiert un ensemble de documents auprès du serveur, il est donc nécessaire que terminal et serveur échangent des informations volumineuses leur permettant, à l'un et/ou à l'autre, de déterminer, parmi les documents nécessaires au terminal, quels sont ceux qui sont déjà présents dans le cache, et que le serveur n'a donc pas besoin d'envoyer.

Le problème que cherche à résoudre ce document US 6 098 064 est un problème d'anticipation sur les demandes des terminaux clients, qui diffère fortement du problème de la réduction des échanges d'informations relatives au contenu de la mémoire cache entre le serveur et le terminal client auquel la présente invention apporte une solution.

Le document de brevet US 5 956 039 présente quant à lui une technique permettant d'accroître les performances d'un système de navigation en temps réel dans une scène 3D..Une telle technique consiste à attribuer des priorités aux différents objets de la scène, de façon que le terminal client reçoive en premier les objets présentant la priorité la plus élevée. Ces priorités sont gérées au sein d'une base de données contenant des informations relatives à chaque objet de la scène courante.
Cependant cette base de données n'est pas gérée en amont du terminal client, et ne permet donc pas de résoudre le problème technique de la réduction des échanges entre le serveur et le terminal auquel la présente invention apporte une solution.

Avantageusement, on mémorise, au sein de ladite liste, un identifiant de chacun desdits objets et, pour l'un au moins desdits objets, une information de restitution dudit objet.

Le serveur peut donc avoir accès, non seulement à la liste des objets contenus dans le cache du client, mais également au niveau de restitution auquel ils peuvent être reproduits par le client.

Préférentiellement, pour l'un au moins desdits objets, ladite information de restitution est relative à un niveau de raffinement dudit objet.

Le serveur peut donc savoir si le terminal client peut reproduire l'objet sous forme grossière ou détaillée par exemple.

De manière préférentielle, pour chacun desdits objets stockés dans ladite mémoire cache, ladite liste comprend un couple <O, L₀> comprenant ledit identifiant O dudit objet et ladite information de restitution L₀ dudit objet.

Selon une caractéristique avantageuse de l'invention, pour chacun desdits terminaux clients, on associe à ladite liste au moins une information relative audit terminal client et/ou à un utilisateur dudit terminal client, appelée information de visualisation, de façon à former un contexte.

Pour chacun des clients connectés au serveur, ce dernier gère donc un contexte comprenant une liste représentative de l'état du cache qui leur est associé, ainsi que des informations de visualisation. De telles informations peuvent notamment être représentatives de la capacité du terminal du client, ou de sa rapidité de traitement.

Préférentiellement, ladite information de visualisation appartient au groupe comprenant :
- une information de position dudit utilisateur ;
- une direction d'observation dudit utilisateur ;
- les paramètres de sélection desdits objets.

De tels paramètres de sélection comprennent par exemple un seuil de sélection des objets, ainsi qu'un angle de vue de l'observateur. Dans le cas de la visualisation d'une scène 3D par le terminal du client, l'information de position peut être exprimée sous la forme d'un point 3D, dont les coordonnées correspondent à la position de l'observateur par rapport au centre de la scène. La direction d'observation peut quant à elle être exprimée sous la forme d'un vecteur 3D.

Avantageusement, ladite liste est gérée par ledit serveur ou par un élément intermédiaire dudit réseau.

Par exemple, la liste peut être gérée par un serveur proxy, intermédiaire entre le serveur et le client. Le serveur peut alors émettre des requêtes à destination du proxy, pour connaître l'état du contenu du cache du client. Cette solution, bien que moins performante en ce qu'elle génère davantage d'échanges d'informations, peut être intéressante dans le cas où le serveur et le proxy sont reliés par un réseau de grande performance, et où l'on souhaite "décharger" le serveur (par exemple si le serveur est de capacité réduite).

Selon une caractéristique préférentielle de l'invention, un tel procédé comprend une phase préliminaire d'initialisation mettant en oeuvre, pour chacun desdits terminaux clients, une première étape de transmission vers ledit serveur d'informations de visualisation initiales, et une étape de mémorisation, par ledit serveur, dans ledit contexte correspondant, desdites informations de visualisation initiales.

Avantageusement, ladite phase préliminaire d'initialisation comprend en outre une deuxième étape de transmission par ledit serveur audit terminal client d'une version grossière de la scène à reproduire par ledit terminal client.

Selon l'invention, et contrairement aux solutions de l'art antérieur, on ne transmet donc pas, à l'initialisation, l'intégralité de la base de données contenant les objets que le client souhaite visualiser, ce qui constitue une économie considérable, en termes de mémoire pour le client et en termes de bande passante du réseau, à l'initialisation. En effet, considérons une base de données de 100 Mbits environ, et considérons que le client et le serveur sont reliés par un réseau de type ADSL (en anglais "Asymmetric Digital Subscriber Line" pour "liaison numérique à débit asymétrique") présentant un débit maximum de 500 kbits/s. La transmission de l'intégralité de la base à l'initialisation de la connexion entre le client et le serveur, permettant de charger toute la scène à visualiser chez le client, se fait donc en un temps minimum de 200 s. L'invention, permettant de supprimer cette transmission à l'initialisation, est donc particulièrement avantageuse pour le client puisqu'elle lui permet de visualiser une représentation au moins grossière de la scène de manière quasi instantanée, et supprime donc une longue attente d'au moins 200 s, soit plus de trois minutes, imposée par les techniques de l'art antérieur.

De manière préférentielle, chacun desdits terminaux clients met en oeuvre une étape de transfert d'au moins certaines desdites informations de visualisation vers ledit serveur à intervalles de temps prédéterminés et/ou lorsque lesdites informations de visualisation sont modifiées.

On notera que le choix consistant à transférer les informations de visualisation à intervalles de temps prédéterminés, à condition qu'elles aient été modifiées depuis leur dernière transmission, permet de minimiser le nombre de transmissions.

Selon un premier mode de réalisation avantageux de l'invention, lesdits intervalles de temps prédéterminés sont fixés par ledit terminal client.

Ils peuvent notamment être forcés par le client, en fonction par exemple de la fréquence à laquelle il souhaite que la scène à visualiser soit rafraîchie.

Selon un deuxième mode de réalisation avantageux de l'invention, lesdits intervalles de temps prédéterminés sont fonction d'au moins une caractéristique dudit réseau de communication.

Notamment, ces intervalles de temps peuvent dépendre de la charge du réseau, de son débit ou de son temps de latence par exemple.

De manière préférentielle, à l'issue de ladite étape de transfert par ledit terminal client, ledit procédé met en oeuvre une étape de mise à jour desdites informations de visualisation au sein dudit contexte correspondant.

Avantageusement, à l'issue de ladite étape de mise à jour, ledit serveur met en oeuvre les étapes suivantes :
- une étape de détermination, en fonction d'au moins certaines desdites informations de visualisation mises à jour, d'au moins un objet d'identifiant O nécessaire audit terminal client, et d'un niveau de restitution L₀ correspondant ;
- une étape d'analyse de ladite liste représentative de ladite mémoire cache associée audit terminal client, de façon à identifier les éventuels couples <O, L₀>, correspondant audit ou auxdits objets d'identifiant O et de niveau de restitution L₀ nécessaires audit terminal client, non mémorisés dans ladite liste ;
- une étape d'émission vers ledit terminal client dudit ou desdits éventuels objets d'identifiant O et de niveau de restitution L₀, nécessaires audit terminal client, correspondant audit ou auxdits éventuels couples <O, L₀> non mémorisés dans ladite liste ;
- une étape d'actualisation de ladite liste représentative de ladite mémoire cache associée audit terminal client, ajoutant, dans ladite liste, ledit ou lesdits couples <O, L₀> correspondant audit ou auxdits éventuels objets émis.

L'étape de détermination d'un ou plusieurs objet(s) nécessaire(s) au client peut résulter d'un calcul effectué par le serveur, en fonction des informations mémorisées dans le contexte du client. Un tel calcul peut également être effectué par une entité de calcul indépendante mais associée au serveur, par exemple préalablement à la connexion du client ; l'étape de détermination consiste alors, pour le serveur, à consulter les résultats de ce calcul de façon à identifier, en fonction des informations de visualisation associées au client, le ou les objet(s) qui lui sont nécessaires. L'invention permet donc, par rapport aux techniques de l'art antérieur, de déporter le calcul des objets nécessaires au client, du terminal du client vers le serveur, ou vers l'entité de calcul qui lui est associée.

De manière avantageuse, ledit serveur met également en oeuvre :
- une étape de détermination d'au moins un objet d'identifiant O et de niveau de restitution L₀ qui pourrait être nécessaire audit terminal client, selon au moins un critère de probabilité prédéterminé ;
- une étape d'envoi par anticipation audit terminal client, dudit au moins un objet d'identifiant O et de niveau de restitution L₀.

Le serveur évalue par exemple la probabilité que l'observateur se rapproche d'un objet de la scène, en fonction de l'évolution de ses déplacements antérieurs, et, si cette probabilité est supérieure à un seuil prédéterminé, le serveur prend l'initiative d'envoyer au client un objet qui lui sera nécessaire dans un avenir proche s'il continue effectivement à se déplacer dans la même direction.

Préférentiellement, sur réception d'au moins un objet émis par ledit serveur, ledit terminal client met en oeuvre les étapes suivantes :
- si le taux de remplissage de ladite mémoire cache associée audit terminal client est inférieur à un seuil prédéterminé, une étape de stockage dudit objet reçu dans ladite mémoire cache ;
- sinon, une étape d'évaluation d'un critère de pertinence dudit objet reçu :
   - Si l'un au moins desdits objets stockés dans ladite mémoire cache présente un critère de pertinence de valeur inférieure à celle dudit critère de pertinence dudit objet reçu, ledit terminal client met en oeuvre une sous-étape de suppression dudit objet moins pertinent de ladite mémoire cache et une sous-étape de stockage dudit objet reçu dans ladite mémoire cache ;
   - Sinon, ledit terminal client met en oeuvre une sous-étape de rejet dudit objet reçu.

Un tel critère de pertinence peut par exemple dépendre de la distance de l'objet à l'observateur.

Selon une caractéristique avantageuse de l'invention, à l'issue de ladite sous-étape de suppression et/ou de ladite sous-étape de rejet, ledit terminal client envoie, vers ledit serveur, au moins une information d'actualisation de ladite mémoire cache associée audit terminal client, de façon que ledit serveur supprime de ladite liste représentative de ladite mémoire cache au moins un couple <O, L₀> correspondant audit objet supprimé au cours de ladite sous-étape de suppression et/ou à un objet, émis par ledit serveur au cours de ladite étape d'émission, mais non mémorisé dans ladite mémoire cache.

De manière préférentielle, au moins certains desdits objets comprennent au moins un index, de façon à pouvoir transmettre sélectivement une portion dudit objet à partir dudit index associé.

Notamment, ces objets sont par exemple de l'un des types suivants :
- les images 2D ;
- les maillages ;
- les textures ;
- les sons ;
- les modèles géométriques ;
- les scènes 3D ;
- les données vidéo ;
- les données paginées.

Il apparaîtra de manière évidente que cette liste n'est pas exhaustive, et est donnée à simple titre d'exemple illustratif.

L'invention concerne aussi un système de transmission de données, appelées objets, via au moins un réseau de communication, entre un serveur et au moins un terminal client, au moins une mémoire cache, destinée à stocker au moins certains desdits objets transmis par ledit serveur, étant associée, au sein dudit réseau, à l'un au moins desdits terminaux clients.

Selon l'invention, un tel système comprend des moyens de gestion, en amont desdits terminaux clients, d'au moins une liste d'objets présents dans ladite mémoire cache associée à l'un desdits terminaux clients, afin de limiter les échanges d'informations relatives au contenu de ladite mémoire cache entre ledit terminal client et ledit serveur.

L'invention concerne également un serveur de données, appelées objets, connecté, via au moins un réseau de communication, à au moins un terminal client, au moins une mémoire cache, destinée à stocker au moins certains desdits objets transmis par ledit serveur, étant associée, au sein dudit réseau, à l'un au moins desdits terminaux clients. Un tel serveur comprend des moyens de gestion d'au moins une liste d'objets présents dans ladite mémoire cache associée à l'un au moins desdits terminaux clients, afin de limiter les échanges d'informations relatives au contenu de ladite mémoire cache avec ledit terminal client associé.

L'invention concerne encore un terminal client d'un serveur de données tel que décrit précédemment, comprenant des moyens de transmission vers ledit serveur d'au moins une information d'actualisation, de façon à permettre audit serveur de mettre à jour ladite liste représentative de ladite mémoire cache associée audit terminal.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'une architecture client-serveur- adaptée à la mise en oeuvre de l'invention ;
- la figure 2 illustre l'architecture de la figure 1, complétée selon l'invention par ajout, au niveau du serveur, d'un bloc de gestion de liste d'objets ;
- la figure 3 illustre un exemple de dialogue client - serveur mis en oeuvre selon l'invention ;
- les figures 4A à 4C présentent un exemple de mode de réalisation de l'invention dans le cadre de modèles 3D codés par ondelettes géométriques ;
- la figure 5 illustre un deuxième exemple de mode de réalisation de l'invention pour des objets utilisant des niveaux de détail non progressifs ;
- la figure 6 est un schéma synoptique des différentes étapes mises en oeuvre par le serveur de l'invention lors d'une phase de visualisation ;
- la figure 7 décrit les différentes étapes mises en oeuvre selon l'invention lors d'une phase d'initialisation ;
- la figure 8 présente un schéma synoptique des différentes étapes mises en oeuvre selon l'invention lors de la réception d'un objet par le terminal client.

Le principe général de l'invention repose sur la gestion, en amont d'un terminal client, d'une liste d'objets présents dans la mémoire cache associée à ce terminal, de façon à réduire les échanges d'informations entre un serveur, auquel le terminal client adresse des requêtes d'objets, et le terminal client lui-même.

On s'attache dans la suite du document à décrire une application particulière de l'invention à la transmission progressive de données, à travers un réseau de communication, pour une visualisation en temps réel d'une scène par le client. (On rappelle que la présente invention ne se limite pas à la visualisation d'objets, mais peut aussi s'appliquer à l'audition d'objets sonores, etc.)

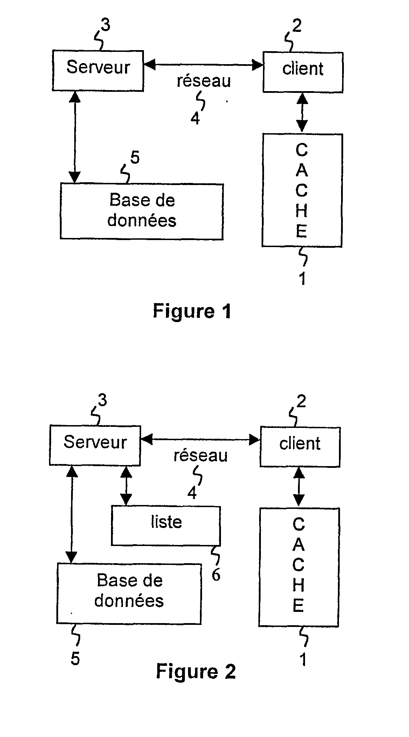

On présente, en relation avec la figure 1, un exemple d'architecture réseau pouvant être mise en oeuvre dans le cadre de l'invention.

Une telle architecture réseau est une architecture client-serveur. Un cache 1 est associé au client 2 : ce cache 1 lui permet de stocker des données transmises par un serveur 3 au travers du réseau de communication 4.

Les données stockées dans le cache 1 peuvent être des données "présentes" (c'est-à-dire en cours d'utilisation par le terminal du client 2), "futures" (c'est-à-dire prévues pour une utilisation ultérieure) ou "passées" (c'est-à-dire utilisées précédemment mais désormais au moins momentanément obsolètes).

Le cache 1 peut être intégré au terminal client 2, ou être simplement associé au terminal client 2, tout en étant situé en un autre point du réseau : par exemple, le cache 1 peut être intégré à un serveur intermédiaire entre le serveur 3 et le client 2, non illustré sur la figure 1, notamment à un serveur de type proxy. Dans une variante de réalisation de l'invention, le cache 1 peut être partagé par plusieurs clients 2. Par souci de simplification, on se limitera, dans la suite du document, à décrire le mode de réalisation particulier de l'invention dans lequel le cache 1 est intégré au terminal du client 2.

Le terminal client 2 gère un ensemble d'informations essentielles à la sélection des objets à afficher sur son écran, en fonction de leur visibilité, telles que la position du client dans la scène à visualiser, l'orientation de son observation, et des paramètres de sélection des objets à afficher ou à reproduire, comme le seuil de sélection des objets, un angle de vue, etc.

Le serveur 3 gère une base de données 5, dans laquelle sont regroupés un ensemble d'objets que le client 2 peut souhaiter visualiser. Ces objets sont de préférence référencés, au sein de la base de données 5, par un identifiant unique, reconnaissable aussi bien par le serveur 3 que par le client 2. Ces objets sont par exemple des maillages 3D, de préférence à transmission progressive, des sons ou tout autre type de données brutes. La base de données 5 peut aussi contenir une pluralité d'objets de nature différente, nécessaires à la reproduction d'une scène par le terminal client 2 : par exemple, dans le cas où le client 2 souhaite visualiser un concert de musique classique, la base de données 5 peut contenir des objets 3D pour reproduire graphiquement la scène, et des sons 3D pour reproduire les sons produits par les instruments de musique.

Selon un mode de réalisation préféré de l'invention, et ainsi qu'illustré en figure 2, le serveur 3 gère en outre une liste 6, qui fait référence au cache 1 du client 2. Selon une variante de l'invention, la liste 6 n'est pas gérée au niveau du serveur 3, mais en amont du terminal client 2, par exemple au sein d'un serveur proxy non illustré sur la figure 2, intermédiaire entre le client 2 et le serveur 3. Par souci de simplification, on se limitera, dans la suite du document, à décrire le mode de réalisation particulier de l'invention dans lequel la liste 6 est gérée par le serveur 3, mais l'Homme du Métier déduira aisément de cette description la réalisation de l'invention dans le cas où la liste 6 est gérée en dehors du serveur 3, en amont du terminal client 2.

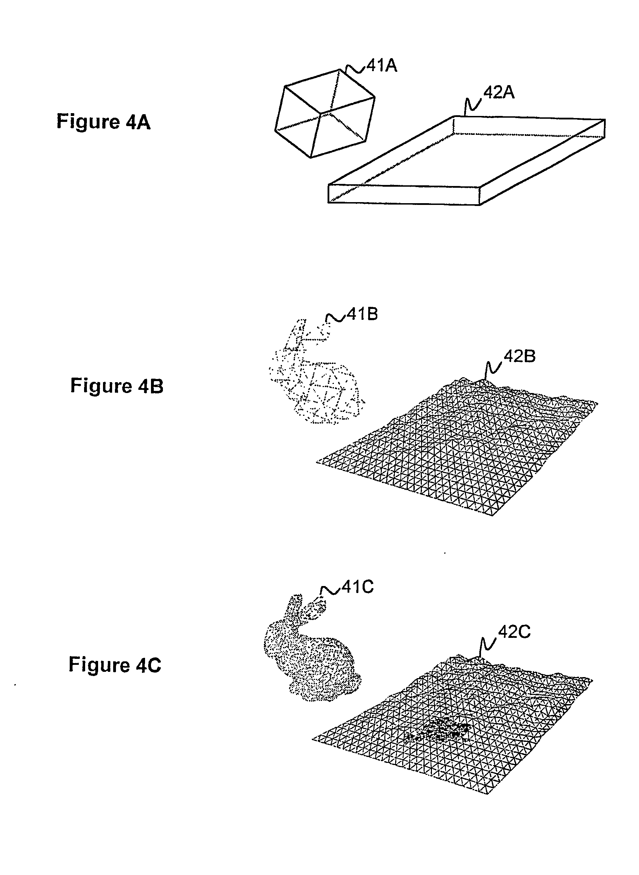

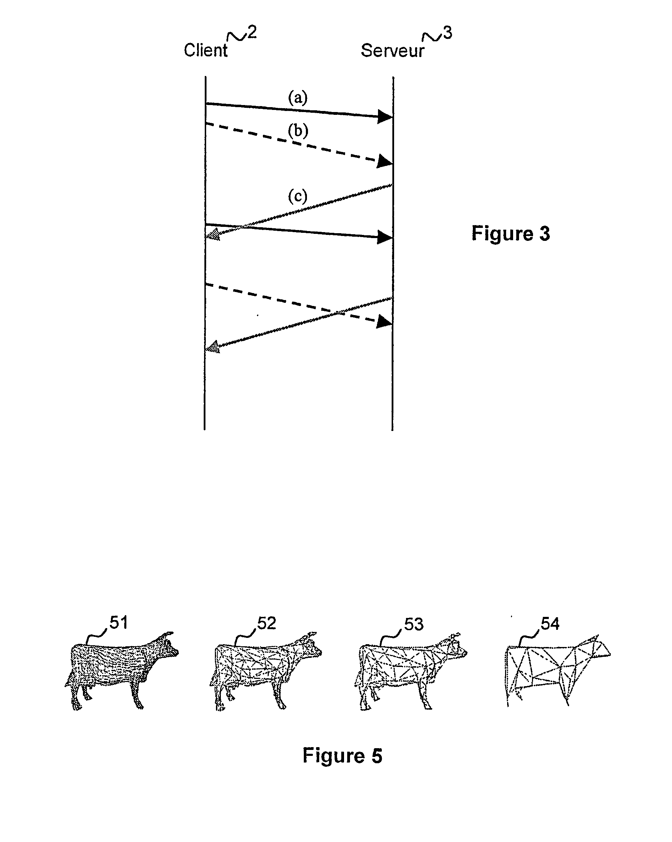

La liste 6 est composée d'un ensemble de couples <O, L₀>, où O est l'identifiant d'un objet, et L₀ correspond à un niveau de restitution de l'objet considéré, qui a été transféré au terminal client 2. Comme illustré dans la suite du document en relation avec les figures 4 et 5, L₀ peut prendre plusieurs formes distinctes, selon le type d'objet O utilisé.

Le serveur 3 peut en outre gérer un ensemble d'informations relatives au terminal client et/ou au client 2, en association avec la liste 6, au sein d'un contexte client non illustré sur la figure 2. Ces informations sont par exemple la position du client dans la base associée à la scène à visualiser, l'orientation de l'observation du client, et les paramètres de sélection des objets à visualiser (à savoir notamment un seuil de sélection et un angle de vue des objets de la scène).

L'architecture présentée en figure 2 permet, dans le cadre de l'invention, de transférer une partie des calculs de sélection des données à visualiser du terminal client 2 vers le serveur 3, ce qui permet avantageusement de réduire les échanges entre le client 2 et le serveur 3. Cet aspect de l'invention sera décrit plus en détails dans la suite du document en relation avec la figure 3.

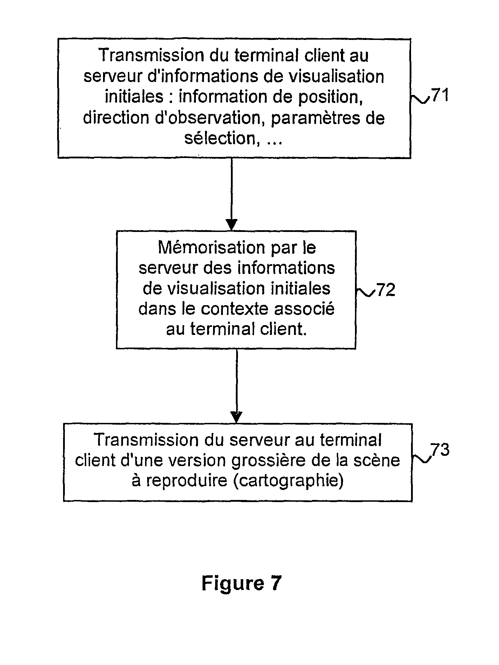

Dans le cadre de l'architecture de la figure 2, on décrit, en relation avec la figure 7, les différentes étapes mises en oeuvre lors d'une phase d'initialisation du dialogue entre le serveur 3 et le client 2. Ainsi, à la connexion du client 2 au serveur 3, certaines données sont transmises afin d'initialiser le serveur 3.

Au cours d'une étape référencée 71, le terminal client 2 transmet au serveur 3 des informations de visualisation initiales, telles que par exemple la position du client dans la scène à visualiser, son orientation, l'angle de vue ou encore le seuil de sélection des objets (en fonction notamment du niveau de détail que souhaite obtenir le client 2). On notera que le type du seuil de sélection peut varier en fonction du type d'objet considéré, ainsi qu'illustré dans la suite du document.

Au cours d'une étape de mémorisation 72, le serveur 3 stocke les informations de visualisation initiales reçues, dans le contexte associé au terminal client 2.

Le serveur 3 peut alors transmettre (73) au terminal client 2 une version grossière de la scène à reproduire, aussi appelée cartographie. Une telle cartographie correspond à une version élémentaire de la base de données 5, et permet au client 2 d'afficher, au moins grossièrement, la scène à visualiser sur son terminal, dès le début de la connexion.

Sur réception de cette cartographie, le client 2 peut notamment créer, au sein du cache 1, différents sous-caches nécessaires au stockage des données reçues du serveur 3.

Selon l'invention, on choisit de stocker dans un même sous-cache tous les objets de même type reçus du serveur 3. Dans le cas où tous les objets de la scène à visualiser sont de même nature, il n'est pas nécessaire de créer de sous-caches au sein du cache 1. Dans l'exemple particulier où le client 2 visualise sur son terminal un relief de terrain, on créera de préférence, au sein du cache 1, un premier sous-cache pour stocker les données relatives à la géométrie du terrain, et un second sous-cache destiné à stocker la texture du terrain.

A l'issue d'une telle phase d'initialisation, le client 2 et le serveur 3 peuvent transmettre et recevoir les données de la base 5 permettant la visualisation par le client 2 de la scène considérée.

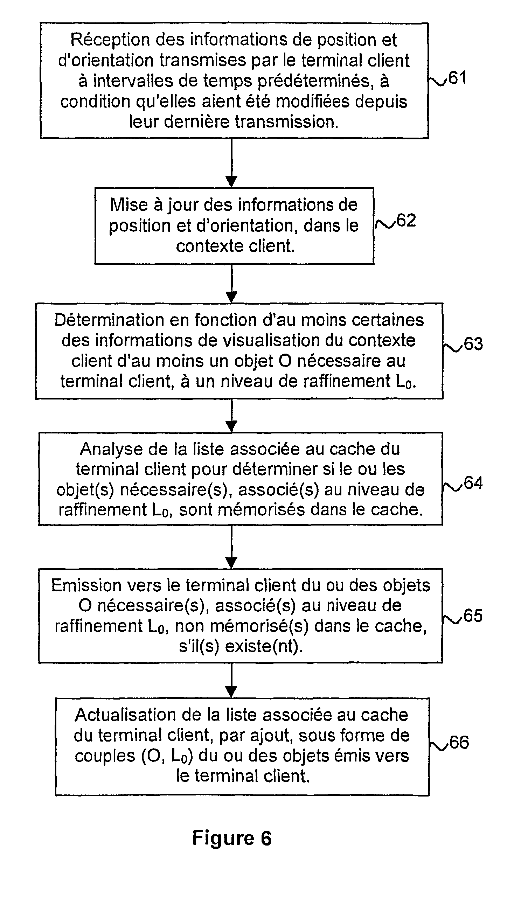

On décrit désormais, en relation avec les figures 3 et 6, le dialogue client-serveur au cours de la phase de visualisation de la scène à reproduire par le terminal client 2.

Le principe général d'une telle phase de visualisation repose sur la transmission, par le client 2, au serveur 3, d'informations que le serveur 3 stocke dans le contexte associé au client 2, et utilise pour transmettre au client 2 les données ou objets nécessaires à la poursuite de la visualisation de la scène.

Ces informations sont de différentes natures, et sont notamment modifiées à différentes fréquences par le client 2. Ainsi, les informations relatives à la position du client dans la scène à reproduire, et à sa direction d'observation sont modifiées tout au long de la visualisation de la scène, puisque le client 2, ou plus exactement l'observateur virtuel qui lui est associé, se déplace dans la scène et la parcourt du regard.

La transmission de ces informations du client 2 au serveur 3 est symbolisée par la flèche (a) en trait plein de la figure 3. Elle s'effectue à une fréquence qui peut être définie par le client 2 (par exemple, toutes les 5 secondes), ou déterminée en fonction des capacités du réseau 4 et du terminal client 2 (par exemple, la fréquence de transmission des informations de visualisation peut être fixée à 2 secondes pour un réseau haut débit, et à 6 secondes pour un réseau bas débit). La transmission de ces informations (a) est en outre avantageusement conditionnée par un critère événementiel, afin de limiter le nombre d'échanges (a) entre le client 2 et le serveur 3 : ainsi, la transmission (a) des informations de position et de direction d'observation n'a lieu que si elles ont été modifiées depuis leur dernière transmission (a) au serveur 3.

Par exemple, si le client 2 s'est déplacé dans la scène depuis la dernière transmission (a) d'informations de position et de direction d'observation au serveur 3, une nouvelle transmission (a) d'informations modifiées aura lieu 5 secondes plus tard (si la fréquence de transmission a été fixée à 5 secondes).

Selon l'invention, le client 2 n'attend pas de réponse de la part du serveur 3 à la transmission (a), qui peut donc se faire en mode non connecté (de type UDP par exemple, pour "User Datagram Protocol").

Ainsi qu'illustré en figure 6, sur réception 61 des informations de position et d'orientation transmises (a) par le client 2, le serveur 3 effectue une mise à jour 62 du contexte associé au client 2, en y mémorisant les nouvelles informations de position et d'orientation reçues.

D'autres informations, comme les paramètres de sélection des objets à transmettre, ou une information d'actualisation du cache 1, sont préférentiellement transmises selon un critère événementiel, à savoir leur modification. Une telle transmission du client 2 au serveur 3 est symbolisée par la flèche (b) en traits pointillés sur la figure 3. Sur réception, le serveur 3 stocke ces informations, soit dans la liste 6 (pour l'information d'actualisation du cache), soit plus généralement dans le contexte associé au client 2.

Ainsi, l'information d'actualisation du cache 1 du client 2 est transmise au serveur 3, sous la forme d'une liste de couples <O, L₀> correspondant aux objets présents dans le cache 1 (ou dans l'un des sous-caches du cache 1), à chaque fois que :
- un ou plusieurs objet(s) ont été supprimés du cache 1 par le terminal client 2 pour permettre de stocker de nouveaux objets transmis par le serveur 3 ; ou
- lorsqu'un ou plusieur(s) objet(s) transmis par le serveur 3 ont été rejetés par le terminal client 2.

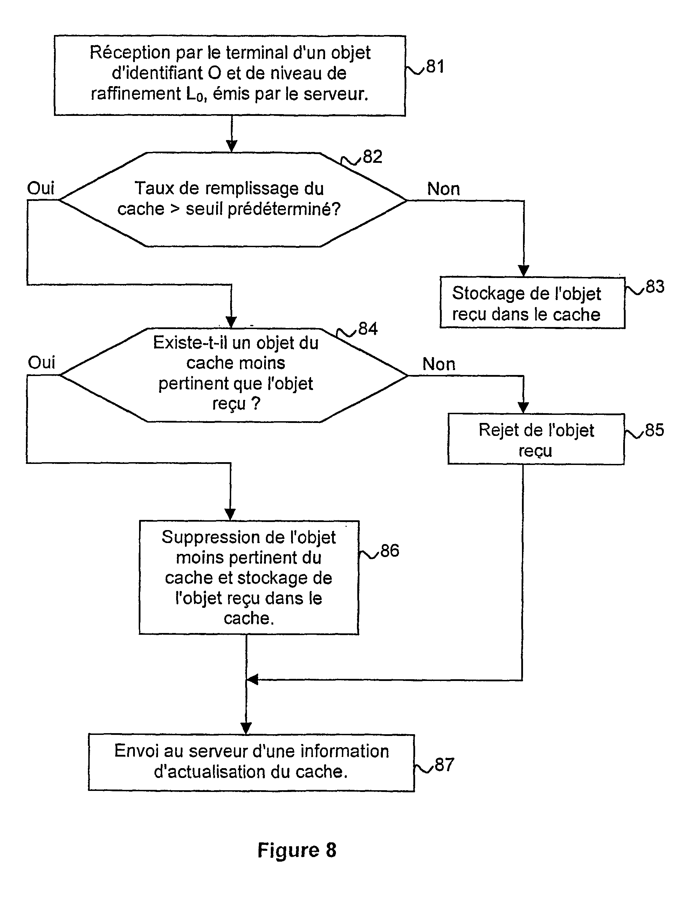

Ces aspects seront décrits plus en détails par la suite en relation avec la figure 8, qui illustre le traitement effectué par le terminal client 2 sur réception d'objets transmis par le serveur 3.

O représente un identifiant d'un objet de la scène, et L₀ est une information relative au niveau de détail de restitution de l'objet O. La structure de L₀ dépend bien sûr du type d'objet O, et de la méthode utilisée pour coder les niveaux de détail associés. Ainsi, L₀ peut être une valeur représentative du niveau de détail (par exemple dans le cas où l'invention met en oeuvre une technique de type HLOD pour "Hierarchical Level Of Detail", en français, "niveau de détail hiérarchique"), ou un ensemble de valeurs représentatives codant les raffinements géométriques de l'objet O, ainsi qu'illustré par la suite en relation avec les figures 4 et 5.

De même, les paramètres de sélection des objets (tels que le seuil de sélection des objets, l'angle de vue, ou toute autre information permettant la modification de la sélection des objets) seront transmis lors de la modification de leur valeur. On peut en effet envisager qu'en cours de visualisation, le client 2 décide de modifier le seuil de sélection défini lors de la phase d'initialisation, de façon par exemple à le diminuer, pour pouvoir obtenir une reproduction plus détaillée de la scène.

On rappelle qu'un tel seuil de sélection peut être défini de nombreuses manières, et notamment être évalué en degrés, en pixels projetés, en taille, etc. Ainsi, le serveur 3 peut ne transmettre au client 2 que les objets qui, après projection sur l'écran du terminal client 2, seront vus par l'observateur virtuel sous un angle supérieur ou égal à 1°. Dans le cas d'un objet associé à un maillage codé par ondelettes, le seuil de sélection peut être par exemple fixé de façon à ne sélectionner que les coefficients d'ondelettes induisant une déformation du maillage supérieure ou égale à 2°. Si l'objet considéré est un son, le seuil de sélection peut dépendre de la fréquence de ce son, ou de sa durée. Le seuil de sélection, ainsi que tous les autres paramètres de sélection peuvent encore être définis de toute autre manière permettant au serveur 3 de sélectionner les objets pertinents à transmettre au client 2.

En fonction des informations contenues dans le contexte associé au client 2 (information de position, de direction d'obseravtion, paramètres de sélection, information relative au contenu du cache 1), le serveur 3 transmet au client 2 les objets ou données qui sont visiblement pertinents. Cette transmission est symbolisée par la flèche (c) grisée continue sur la figure 3. La détermination des objets visuellement pertinents peut résulter de calculs effectués par le serveur 3, ou par une autre entité du réseau 4. Elle peut également avoir été calculée préalablement à l'établissement de la connexion entre le serveur 3 et le client 2, et mémorisée au sein du réseau, par exemple dans le serveur 3.

Ainsi, dans le mode de réalisation particulier illustré en figure 6, le serveur 3 détermine (63), en fonction de toutes ou partie des informations de visualisation (par exemple en fonction de l'information de position, de direction d'observation du client 2 et des paramètres de sélection) contenues dans le contexte du client 2, le ou les objets O nécessaires au terminal client 2, à un niveau de restitution adéquat.

Le serveur 3 analyse alors (64) la liste 6 associée au cache 1 du terminal client 2, mise à jour en fonction des dernières informations d'actualisation reçues, pour déterminer si le ou les objet(s) nécessaire(s) au client 2, dans le niveau de raffinement L₀ adéquat, sont déjà mémorisés dans le cache 1 du client 2.

Dans le cas contraire, le serveur 3 émet (65) ce ou ces objet(s) vers le terminal client 2.

Selon l'invention, on peut également mettre en oeuvre une méthode d'anticipation permettant su serveur 3 de transmettre (c) au client 2 des objets qui ne lui sont pas encore nécessaires, mais dont le serveur prévoit qu'ils le deviendront dans un futur proche. Par exemple, si le serveur 3 détermine que le client 2 s'est déplacé à plusieurs reprises successives dans la même direction, il peut transmettre (c) au client 2 un objet qui n'est pas encore pertinent pour le client 2, mais qui entrera prochainement dans son champ de vision si le client 2 continue à se déplacer dans cette direction.

Lors de cette transmission (c), le serveur 3 modifie la liste 6 associée au client 2, en y ajoutant, sous forme de couples <O, L₀>, les données transmises (c) au client 2, en considérant que toutes les données transmises au client ont été stockées dans le cache 1. Cette étape d'actualisation est illustrée en figure 6 par l'étape référencée 66. Une telle modification de la liste 6 permet avantageusement de minimiser les redondances de transmission. Il peut arriver que certaines des données transmises (c) par le serveur 3 au client 2 ne soient pas stockées dans le cache 1, en cas par exemple d'erreur de transmission liée au réseau, ce qui entraîne .. une perte de cohérence entre l'état du cache 1 et la liste 6. L'invention prévoit avantageusement de remédier à ce problème. Le maintien de la cohérence entre l'état du cache 1 et la liste 6 sera décrite plus en détails par la suite en relation avec la figure 8.

On décrit désormais, en relation avec les figures 4A à 4C, un exemple de visualisation par le client 2 de modèles tridimensionnels codés par ondelettes géométriques. On rappelle que les méthodes de codage dites "à ondelettes" permettent de représenter un maillage comme une succession de détails ajoutés à un maillage de base. La théorie générale de cette technique est notamment décrite dans l'article de M. Lounsbery, T. DeRose et J. Warren, "Multiresolution Analysis for Surfaces of Arbitrary Topological Type" (ACM Transaction on Graphics, Vol. 16, No.1, pp. 34-73, Janvier 1997).

Comme décrit précédemment, à l'issue de la phase d'initialisation du dialogue client-serveur, le serveur 3 transmet au terminal client 2 une version grossière, appelée cartographie, de la base 5. Dans le cas d'une base 5 constituée d'un ensemble de modèles 3D (illustré en figures 4A à 4C), cette cartographie correspond par exemple à un ensemble de valeurs indiquant au terminal client 2 l'emplacement et la taille des différents objets de la base 5, par exemple sous la forme de l'emplacement et de la taille de boîtes 41A et 42A englobant ces objets.

En fonction de la visibilité de ces objets (c'est-à-dire en fonction de leur présence partielle ou totale dans le champ de vision de l'observateur, de leur distance à l'observateur, etc.), le serveur 3 transmet ensuite le maillage de base 41B, 42B de ces objets au client 2. Ces maillages de base 41B, 42B permettent au client 2 de construire les différents sous-caches qui lui sont nécessaires pour stocker les données en provenance du serveur 3, et d'élaborer une liste de couples <O, L₀> initiale correspondante.

Dans l'exemple des figures 4A à 4C, on considère que les maillages de base 41B, 42B comprennent chacun n faces. La liste 6 gérée par le serveur 3 pour le client 2 sera donc constituée d'un ensemble de couples <O, <N1, ..., Nn>>, où O représente l'identifiant de l'objet et où Ni représente le nombre de coefficients d'ondelettes présents dans le cache 1 pour la face i du maillage de base 41B, 42B. Lors de la transmission du maillage de base 41B, 42B, les Ni pour i ∈[1,n] sont tous initialisés à zéro.

On notera que la connaissance des Ni pour i ∈[1,n] suffit au serveur 3 pour déterminer de façon exacte les coefficients d'ondelettes présents dans le cache 1 du client 2, à condition qu'un ordre de tri des coefficients d'ondelettes pour chacune des faces soit préalablement déterminé. Ainsi, si le client 2 informe le serveur 3, au cours de l'étape (b) de la figure 3, qu'il dispose de 30 coefficients pour la face n°8 du maillage 41B, le serveur 3 commencera à transmettre les coefficients, qui sont associés à la face n°8 du maillage 41B, et pertinents pour le client 2, à partir du 31^{ème} coefficient. On rappelle que la sélection des coefficients pertinents tient compte des informations de visualisation mémorisées dans le contexte du client, telles que l'information de position, d'orientation d'observation, et les paramètres de sélection.

L'ordre de tri des coefficients par face du maillage est préférentiellement conservé à leur arrivée dans le terminal du client 2.

A partir des coefficients transmis par le serveur pour chacune des faces visibles du maillage de base 41B, 41C, le terminal client 2 peut reconstruire une représentation détaillée 41C, 42C des objets de la scène.

On présente désormais en relation avec la figure 5, un deuxième exemple de mise en oeuvre de l'invention, pour des objets utilisant des niveaux de détail non progressifs. Contrairement à l'exemple précédent mettant en oeuvre une technique de codage par ondelettes, dans lequel les objets, ou des portions d'objets, peuvent être raffinés sélectivement en fonction du point de vue de l'utilisateur, on présente ici le cas d'un objet représenté par quatre niveaux de détail successifs référencés 51 à 54.

Comme dans l'exemple des figures 4A à 4C, le serveur 3 commence par transmettre au client 2 une cartographie de la base de données 5, qui permettra au client 2 de connaître les données à afficher. Pour chaque objet de la base 5 qu'il estime.potentiellement visible, le..serveur 3 transmet ensuite l'objet dans son niveau de détail le plus bas 54 (c'est-à-dire la version la plus grossière de l'objet) au client 2. Au cours de la visualisation, le serveur 3 transmettra ensuite les niveaux de détail supérieurs 53 à 51, en fonction de la position du client 2 dans la scène. Ainsi, si le client 2 s'approche progressivement de l'objet de la figure 5, le serveur 3 transmettra progressivement les niveaux de détail 53, puis 52, puis 51, en fonction de la distance de l'observateur à l'objet.

Le codage du niveau de raffinement L₀ associé à l'objet O dépendra des contraintes imposées par l'application mise en oeuvre, notamment du caractère obligatoire ou non de la transmission des objets dans l'ordre des niveaux de détail associés.

Ainsi, dans le cas où le serveur 3 est obligé de transmettre les objets au client 2 dans l'ordre de leur niveau de raffinement, on choisira de donner à L₀ la valeur du niveau de détail le plus élevé présent dans le cache 1 pour l'objet O. Si le cache 1 contient les niveaux de raffinement référencés 54 (niveau de raffinement 0) et 53 (niveau de raffinement 1) pour l'objet O, L₀ prendra la valeur "1". La liste 6 contiendra alors le couple <O, " 1 ">, et le serveur 3 en déduira que le cache 1 contient les niveaux de raffinement 0 et 1 pour l'objet O. Il ne transmettra donc au client 2, si nécessaire, que le niveau de détail directement supérieur, à savoir le niveau référencé 52 correspondant à un niveau de raffinement "2".

Dans le cas où la transmission du serveur 3 au client 2 dans l'ordre des niveaux de raffinement n'est pas obligatoire, L₀ représentera pour l'objet O l'ensemble des niveaux de raffinement mémorisés pour cet objet dans le cache 1 du client. On choisira par exemple de coder L₀ sur plusieurs bits, de façon que le bit, dont la position dans L₀ correspond à un niveau de détail mémorisé dans le cache 1 du client 2, prenne la valeur 1. Dans l'exemple de la figure 5, si le cache 1 du client 2 contient les niveaux de raffinement "0" et "2", correspondant respectivement aux représentations référencées 54 et 52, on aura L₀ = 0101. Le serveur 3 saura alors qu'il peut transmettre les niveaux de détail 1 et 3, correspondant respectivement aux représentations référencées 53 et 51, selon l'emplacement de l'utilisateur dans la scène (notamment selon sa distance à l'objet considéré, et sa direction d'observation).

De même, si l'on considère un objet auquel sont associés huit niveaux de détail successifs, et si le cache 1 du client 2 comprend pour cet objet les niveaux de détail 1, 2, 4 et 7, L₀ aura la valeur "01001011". Le serveur 3 sait alors qu'il peut transmettre les niveaux 3, 5, 6 et 8 au client 2, selon les informations de visualisation mémorisées dans le contexte associé.

On notera que ce type de codage de L₀ n'est pas restreint aux objets 3D composés de faces, mais peut être appliqué à tout type de données composées de niveaux de détail non progressifs, comme des textures multi-résolutions par exemple.

On présente désormais brièvement un troisième exemple d'application de l'invention au cas des données brutes de type son ou vidéo, ou encore au cas des données paginées (de type gestion de stock, de personnel, etc.).

Dans le cas de données brutes de type son par exemple, la transmission d'une cartographie par le serveur 3 peut ne pas exister. Elle peut aussi correspondre à la transmission par le serveur 3 d'un ensemble de données temporelles, indiquant par exemple au client 2 qu'un son de violon devra être joué ou reproduit dans 30 secondes. Pour ce type d'objets sonores, l'information de restitution L₀ correspondra par exemple au pourcentage de données transmis. La valeur de L₀ permettra ainsi au serveur 3 de savoir par exemple que les 15 premières secondes d'un son d'une durée de 2 min 30s sont stockées dans le cache 1 du client 2.

Dans le cas de données paginées, la cartographie émise à l'initialisation par le serveur 3 pourra par exemple correspondre au nombre total de pages existant pour chacune des données dans la base de données 5. L'information de restitution L₀ pourra dans ce cas être une donnée variable de la forme <N, N0, ..., Nn>, où N représente le nombre de pages connues pour cet objet (c'est-à-dire le nombre de pages stockées dans le cache du client pour cet objet), et où Ni indique le nom de la i^{ème} page.

On décrit désormais, en relation avec la figure 8, les différentes étapes mises en oeuvre par le terminal client 2, sur réception 81 d'un ou plusieurs objets O_{R} envoyés par le serveur 3 au cours de la transmission référencée (c) sur la figure 3. Par souci de simplification, on décrit ici le cas où le serveur 3 transmet un unique objet O_{R} au client 2. La technique mise en oeuvre dans le cas où plusieurs objets O_{R} sont reçus par le client 2 et/ou le cache 1 s'en déduit bien sûr aisément.

Au cours d'une étape référencée 82, le terminal client vérifie le taux de remplissage du cache 1 qui lui est associé. Dans le cas où le cache 1 n'est pas intégré au terminal 2, cette vérification est mise en oeuvre par l'entité chargée de la gestion du cache 1, par exemple un serveur proxy auquel le cache 1 est intégré.

Si le taux de remplissage du cache 1 est inférieur à un seuil de remplissage prédéterminé, indiquant ainsi qu'il est encore possible de stocker un ou plusieurs nouveaux objets dans le cache 1, l'objet reçu O_{R} est mémorisé (83) dans le cache 1 du client 2.

Dans le cas contraire, il n'est pas possible de stocker l'objet O_{R} reçu du serveur 3 dans le cache 1, en l'état. On détermine alors (84) s'il existe un objet O_{S} du cache 1, qui est visuellement moins pertinent que l'objet reçu O_{R} pour l'observateur. Un tel objet O_{S} peut être un objet qui est sorti du champ de vision du client 2, en raison par exemple d'un déplacement récent, ou d'un changement de direction d'observation du client 2.

Si un tel objet moins pertinent O_{S} existe, il est supprimé (86) du cache 1, de façon que le nouvel objet O_{R} reçu du serveur 3 puisse être stocké dans le cache 1 à sa place.

Le terminal client 2 envoie alors (87) une information d'actualisation de l'état du cache 1, pour informer le serveur 3 de la suppression de cet objet O_{S} du cache 1, et de la mémorisation correspondante de l'objet O_{R}.

Si en revanche tous les objets stockés dans le cache 1 sont visuellement plus pertinents que l'objet O_{R} reçu du serveur 3, l'entité chargée de gérer le cache 1 (le terminal client 2 par exemple) rejette cet objet O_{R}.

Le terminal client 2 envoie alors (87) une information d'actualisation de l'état du cache 1, pour informer le serveur 3 que l'objet O_{R} n'a pas pu être mémorisé dans le cache 1.

Cette information d'actualisation permet également au serveur 3 de maintenir la cohérence entre l'état du cache 1 et la liste 6 représentative de son contenu. En effet, sur réception de cette information d'actualisation, le serveur 3 peut notamment vérifier que tous les objets qu'il a transmis au client 2, et qu'il a donc ajoutés à la liste 6, ont bien été reçus sans erreur par le client 2 et/ou le cache 1. Ceci permet notamment de traquer les problèmes de transmission qui pourraient être liés à une défaillance du réseau 4.

Le serveur 3 compare donc l'information d'actualisation reçue du client 2 et la liste 6, de manière à vérifier leur conformité et, le cas échant, à mettre à jour la liste 6 en fonction de l'information d'actualisation reçue.

## Revendications

1. Procédé de transmission de données, appelées objets, via au moins un réseau de communication (4), entre un serveur (3) et au moins un terminal client (2),
au moins une mémoire cache (1), destinée à stocker au moins certains desdits objets transmis par ledit serveur, étant associée, au sein dudit réseau, à l'un au moins desdits terminaux clients,
**caractérisé en ce que** ledit serveur (3) ou un élément intermédiaire dudit réseau gère, en amont desdits terminaux clients, au moins une liste (6) de chacun des objets présents dans ladite mémoire cache (1) associée à l'un desdits terminaux clients, afin de limiter les échanges d'informations relatives au contenu de ladite mémoire cache entre ledit terminal client (2) et ledit serveur (3).

2. Procédé de transmission selon la revendication 1, **caractérisé en ce qu'**on mémorise, au sein de ladite liste (6), un identifiant de chacun desdits objets et, pour l'un au moins desdits objets, une information de restitution dudit objet.

3. Procédé de transmission selon la revendication 2, **caractérisé en ce que**, pour l'un au moins desdits objets, ladite information de restitution est relative à un niveau de raffinement dudit objet.

4. Procédé de transmission selon l'une quelconque des revendications 2 et 3, **caractérisé en ce que**, pour chacun desdits objets stockés dans ladite mémoire cache, ladite liste (6) comprend un couple <O, L₀> comprenant ledit identifiant O dudit objet et ladite information de restitution L₀ dudit objet.

5. Procédé de transmission selon l'une quelconque des revendications 1 à 4, **caractérisé en ce que**, pour chacun desdits terminaux clients (2), on associe à ladite liste (6) au moins une information relative audit terminal client (2) et/ou à un utilisateur dudit terminal client, appelée information de visualisation, de façon à former un contexte.

6. Procédé de transmission selon la revendication 5, **caractérisé en ce que** ladite information de visualisation appartient au groupe comprenant :
- une information de position dudit utilisateur ;
- une direction d'observation dudit utilisateur ;
- les paramètres de sélection desdits objets.

7. Procédé de transmission selon l'une quelconque des revendications 5 et 6, **caractérisé en ce qu'**il comprend une phase préliminaire d'initialisation mettant en oeuvre, pour chacun desdits terminaux clients (2), une première étape de transmission (71) vers ledit serveur (3) d'informations de visualisation initiales, et une étape de mémorisation (72), par ledit serveur (3), dans ledit contexte correspondant, desdites informations de visualisation initiales.

8. Procédé de transmission selon la revendication 4, **caractérisé en ce que** ladite phase préliminaire d'initialisation comprend en outre une deuxième étape de transmission (73) par ledit serveur (3) audit terminal client (2) d'une version grossière de la scène à reproduire par ledit terminal client.

9. Procédé de transmission selon l'une quelconque des revendications 5 à 8, **caractérisé en ce que** chacun desdits terminaux clients met en oeuvre une étape de transfert d'au moins certaines desdites informations de visualisation vers ledit serveur à intervalles de temps prédéterminés et/ou lorsque lesdites informations de visualisation sont modifiées.

10. Procédé de transmission selon la revendication 9, **caractérisé en ce que** lesdits intervalles de temps prédéterminés sont fixés par ledit terminal client.

11. Procédé de transmission selon la revendication 10, **caractérisé en ce que** lesdits intervalles de temps prédéterminés sont fonction d'au moins une caractéristique dudit réseau de communication.

12. Procédé de transmission selon l'une quelconque des revendications 9 à 11, **caractérisé en ce qu'**à l'issue de ladite étape de transfert par ledit terminal client, ledit procédé met en oeuvre une étape de mise à jour (62) desdites informations de visualisation au sein dudit contexte correspondant.

13. Procédé de transmission selon la revendication 12, **caractérisé en ce qu'**à l'issue de ladite étape de mise à jour, ledit serveur met en oeuvre les étapes suivantes :
- une étape de détermination (63), en fonction d'au moins certaines desdites informations de visualisation mises à jour, d'au moins un objet d'identifiant O nécessaire audit terminal client, et d'un niveau de restitution L₀ correspondant ;
- une étape d'analyse (64) de ladite liste représentative de ladite mémoire cache associée audit terminal client, de façon à identifier les éventuels couples <O, L₀>, correspondant audit ou auxdits objets d'identifiant O et de niveau de restitution L₀ nécessaires audit terminal client, non mémorisés dans ladite liste ;
- une étape d'émission (65) vers ledit terminal client dudit ou desdits éventuels objets d'identifiant O et de niveau de restitution L₀, nécessaires audit terminal client, correspondant audit ou auxdits éventuels couples <O, L₀> non mémorisés dans ladite liste ;
- une étape d'actualisation (66) de ladite liste représentative de ladite mémoire cache associée audit terminal client, ajoutant, dans ladite liste, ledit ou lesdits couples <O, L₀> correspondant audit ou auxdits éventuels objets émis.

14. Procédé de transmission selon la revendication 13, **caractérisé en ce que** ledit serveur met également en oeuvre :
- une étape de détermination d'au moins un objet d'identifiant O et de niveau de restitution L₀ qui pourrait être nécessaire audit terminal client, selon au moins un critère de probabilité prédéterminé ;
- une étape d'envoi par anticipation audit terminal client, dudit au moins un objet d'identifiant O et de niveau de restitution L₀.

15. Procédé de transmission selon l'une quelconque des revendications 13 et 14, **caractérisé en ce que**, sur réception (81) d'au moins un objet émis par ledit serveur, ledit terminal client met en oeuvre les étapes suivantes :
- si le taux de remplissage de ladite mémoire cache associée audit terminal client est inférieur à un seuil prédéterminé, une étape de stockage (83) dudit objet reçu dans ladite mémoire cache ;
- sinon, une étape d'évaluation (84) d'un critère de pertinence dudit objet reçu :
• Si l'un au moins desdits objets stockés dans ladite mémoire cache présente un critère de pertinence de valeur inférieure à celle dudit critère de pertinence dudit objet reçu, ledit terminal client met en oeuvre une sous-étape de suppression (86) dudit objet moins pertinent de ladite mémoire cache et une sous-étape de stockage dudit objet reçu dans ladite mémoire cache ;
• Sinon, ledit terminal client met en oeuvre une sous-étape de rejet (85) dudit objet reçu.

16. Procédé de transmission selon la revendication 15, **caractérisé en ce qu'**à l'issue de ladite sous-étape de suppression et/ou de ladite sous-étape de rejet, ledit terminal client envoie (87), vers ledit serveur, au moins une information d'actualisation de ladite mémoire cache associée audit terminal client,
de façon que ledit serveur supprime de ladite liste représentative de ladite mémoire cache au moins un couple <O, L₀> correspondant audit objet supprimé au cours de ladite sous-étape de suppression et/ou à un objet, émis par ledit serveur au cours de ladite étape d'émission, mais non mémorisé dans ladite mémoire cache.

17. Procédé de transmission selon l'une quelconque des revendications 1 à 16, **caractérisé en ce qu'**au moins certains desdits objets comprennent au moins un index, de façon à pouvoir transmettre sélectivement une portion dudit objet à partir dudit index associé.

18. Système de transmission de données, appelées objets, via au moins un réseau de communication, entre un serveur (3) et au moins un terminal client (2), au moins une mémoire cache (1), destinée à stocker au moins certains desdits objets transmis par ledit serveur, étant associée, au sein dudit réseau, à l'un au moins desdits terminaux clients,
**caractérisé en ce qu'**il comprend des moyens de gestion, en amont desdits terminaux clients, d'au moins une liste (6) de chacun des objets présents dans ladite mémoire cache associée à l'un desdits terminaux clients, afin de limiter les échanges d'informations relatives au contenu de ladite mémoire cache entre ledit terminal client et ledit serveur.

19. Serveur de données, appelées objets, connecté, via au moins un réseau de communication, à au moins un terminal client,
au moins une mémoire cache, destinée à stocker au moins certains desdits objets transmis par ledit serveur, étant associée, au sein dudit réseau, à l'un au moins desdits terminaux clients,
**caractérisé en ce qu'**il comprend des moyens de gestion d'au moins une liste de chacun des objets présents dans ladite mémoire cache associée à l'un au moins desdits terminaux clients,
afin de limiter les échanges d'informations relatives au contenu de ladite mémoire cache avec ledit terminal client associé.

20. Terminal client d'un serveur de données selon la revendication 19,
**caractérisé en ce qu'**il comprend des moyens de transmission vers ledit serveur d'au moins une information d'actualisation, de façon à permettre audit serveur de mettre à jour ladite liste représentative de ladite mémoire cache associée audit terminal.

## Patentansprüche

1. Verfahren zum Übertragen von Daten, bezeichnet als Objekte, über zumindest ein Kommunikationsnetz (4) zwischen einem Server (3) und zumindest einem Client-Endgerät (2), wobei zumindest ein Cache-Speicher (1), ausgestaltet zum Speichern zumindest einiger der von dem Server übertragenen Objekte, mit zumindest einem der Client-Endgeräte innerhalb des Netzes verknüpft ist,
**dadurch gekennzeichnet, dass** zumindest eine Liste (6) eines jeden Objektes, das in dem mit einem der Client-Endgeräte verknüpften Cache-Speicher (1) vorhanden ist, stromaufwärts der Client-Endgeräte von dem Server (3) oder von einem Zwischenelement des Netzes verwaltet wird, um Inhalte des Cache-Speichers betreffenden Informationsaustausch zwischen dem Client-Endgerät (2) und dem Server (3) zu begrenzen.

2. Übertragungsverfahren nach Anspruch 1,
**dadurch gekennzeichnet, dass** eine Identifizierung eines jeden Objektes in der Liste (6) gespeichert wird, gemeinsam mit einer Information über die Reproduktion des Objektes, für zumindest eines der Objekte.

3. Übertragungsverfahren nach Anspruch 2,
**dadurch gekennzeichnet, dass** sich die Reproduktionsinformation für zumindest eines der Objekte auf ein Verfeinerungsniveau des Objektes bezieht.

4. Übertragungsverfahren nach einem der Ansprüche 2 und 3,
**dadurch gekennzeichnet, dass** die Liste (6) für jedes in dem Cache-Speicher gespeicherte Objekt ein Paar <O, L₀> umfasst, enthaltend die Identifizierung O des Objektes und die Reproduktionsinformation L₀ des Objektes.

5. Übertragungsverfahren nach einem der Ansprüche 1 bis 4,
**dadurch gekennzeichnet, dass** zumindest eine Informationseinheit über das Client-Endgerät (2) und/oder einen Benutzer des Client-Endgeräts, bezeichnet als die Anzeigeinformation, für jedes der Client-Endgeräte mit der Liste (6) verknüpft ist, um einen Kontext zu bilden.

6. Übertragungsverfahren nach Anspruch 5,
**dadurch gekennzeichnet, dass** die Anzeigeinformation zu der Gruppe gehört mit:
einer Positionsinformation des Benutzers;
einer Beobachtungsrichtung des Benutzers;
einem Auswahlparameter der Objekte.

7. Übertragungsverfahren nach einem der Ansprüche 5 und 6,
**dadurch gekennzeichnet, dass** es eine vorbereitende Initialisierungsphase für jedes Client-Endgerät (2) umfasst, welche einen ersten Übertragungsschritt (71) aufweist, bei dem die Anfangsanzeigeinformation auf den Server (3) übertragen (71) wird, und einen Speicher-Schritt (72), bei dem der Server (3) die Anfangsanzeigeinformation in dem entsprechenden Kontext speichert.

8. Übertragungsverfahren nach Anspruch 4,
**dadurch gekennzeichnet, dass** die vorbereitende Initialisierungsphase weiterhin einen zweiten Übertragungsschritt (73) umfasst, bei dem der Server (3) eine Grobversion der durch das Client-Endgerät zu reproduzierenden Szene an das Client-Endgerät (2) sendet.

9. Übertragungsverfahren nach einem der Ansprüche 5 bis 8,
**dadurch gekennzeichnet, dass** jedes Client-Endgerät einen Schritt implementiert zum Übertragen zumindest einiger der Einheiten der Anzeigeinformation an den Server in vorbestimmten Zeitintervallen und/oder bei einer Modifizierung der Anzeigeinformation.

10. Übertragungsverfahren nach Anspruch 9,
**dadurch gekennzeichnet, dass** die vorbestimmten Zeitintervalle durch das Client-Endgerät festgelegt werden.

11. Übertragungsverfahren nach Anspruch 10,
**dadurch gekennzeichnet, dass** die vorbestimmten Zeitintervalle von zumindest einer Eigenschaft des Kommunikationsnetzes (4) abhängig sind.

12. Übertragungsverfahren nach einem der Ansprüche 9 bis 11,
**dadurch gekennzeichnet, dass** das Verfahren am Ende des von dem Client-Endgerät durchgeführten Übertragungsschrittes einen Schritt (62) zum Aktualisieren der Anzeigeinformation in dem entsprechenden Kontext implementiert.

13. Übertragungsverfahren nach Anspruch 12,
**dadurch gekennzeichnet, dass** der Server am Ende dieses Aktualisierungsschrittes die folgenden Schritte implementiert:
einen Bestimmungsschritt (63), als Funktion von zumindest einigen der aktualisierten Anzeigeinformationen, zum Bestimmen von zumindest einem für das Client-Endgerät (2) erforderlichen Identifizierungsobjekt O und einem entsprechenden Reproduktionspegel L0;
einen Schritt (64) zum Analysieren der Liste, die repräsentativ für den mit dem Client-Endgerät verknüpften Cache-Speicher ist, um de(m)/(n) Identifizierungsobjekt(en) O und für das Client-Endgerät erforderlichen Reproduktionspegel L0 entsprechende Paare <O, L0>, falls vorhanden, zu identifizieren, die nicht in der Liste (6) gespeichert sind;
einen Schritt (65) zum Übertragen de(s)/(r) Identifizierungsobjekte(s) O, falls vorhanden, mit einem für das Client-Endgerät erforderlichen Reproduktionspegel L0, entsprechend de(m)/(n) nicht in der Liste gespeicherten Paar(en) <O, L0> zu dem Client-Endgerät (2);
einen Schritt (66) zum Aktualisieren der für den mit dem Client-Endgerät verknüpften Cache-Speicher repräsentativen Liste, wobei das/(die) Paar(e) <O, L0>, die dem/(n) übertragenen Objekt(en) entsprechen, falls vorhanden, zu dem Client-Endgerät hinzugefügt werden.

14. Übertragungsverfahren nach Anspruch 13,
**dadurch gekennzeichnet, dass** der Server auch implementiert:
einen Schritt zum Bestimmen zumindest eines Identifizierungsobjektes O und eines Reproduktionspegels L₀, der für das Client-Endgerät (2) erforderlich sein könnte, gemäß zumindest einem vorbestimmten Wahrscheinlichkeitskriterium;
einen Schritt, in dem das zumindest eine Identifizierungsobjekt O und der Reproduktionspegel L₀ zu dem Client-Endgerät (2) vorausahnend übertragen werden.

15. Übertragungsverfahren nach einem der Ansprüche 13 und 14,
**dadurch gekennzeichnet, dass** das Client-Endgerät beim Empfang (81) von zumindest einem von dem Server gesendeten Objekt die folgenden Schritte durchführt:
einen Schritt (83) zum Speichern des empfangenen Objektes in dem Cache-Speicher (1), falls das Füllungsverhältnis des mit dem Client-Endgerät verknüpften Cache-Speichers kleiner als ein vorbestimmter Schwellwert ist;
andernfalls, einen Schritt (84) zum Auswerten eines Relevanzkriteriums für das empfangene Objekt:
• falls zumindest eines der im Cache-Speicher gespeicherten Objekte ein Relevanzkriterium aufweist mit einem Wert, der kleiner ist als das Relevanzkriterium des empfangenen Objektes, implementiert das Client-Endgerät einen Unterschritt (86) zum Löschen des weniger relevanten Objektes aus dem Cache-Speicher und einen Unterschritt zum Speichern des empfangenen Objektes in dem Cache-Speicher;
• andernfalls implementiert das Client-Endgerät einen Unterschritt (85) zum Abweisen des empfangenen Objektes.

16. Übertragungsverfahren nach Anspruch 15,
**dadurch gekennzeichnet, dass** das Client-Endgerät nach dem Löschungsunterschritt (86) und/oder dem Abweisungsunterschritt (85) zumindest eine den Cache-Speicher betreffenden Aktualisierungsinformation auf den Server sendet (87), um der Server zumindest ein Paar <O, L₀> aus der Liste die repräsentativ für den Cache-Speicher ist, zu löschen, wobei das Paar dem Objekt entspricht, das im Verlauf von dem Unterschritt zum Löschen gelöscht wird und/oder einem Objekt entspricht, das im Verlauf von dem Übertragungsschritt von dem Server übertragen wird aber nicht im Cache-Speicher gespeichert wird.

17. Übertragungsverfahren nach einem der Ansprüche 1 bis 16,
**dadurch gekennzeichnet, dass** zumindest einige der Objekte zumindest einen Index umfassen, um selektiv einen Teil des Objektes beginnend mit dem zugehörigen Index zu übertragen.

18. System zur Übertragung von Daten, bezeichnet als Objekte, über zumindest ein Kommunikationsnetz, zwischen einem Server (3) und zumindest einem Client-Endgerät (2), wobei zumindest ein Cache-Speicher (1), der zum Speichern von zumindest einigen der von dem Server übertragenen Objekte ausgestaltet ist, innerhalb des Netzes mit zumindest einem der Client-Endgeräts (2) verknüpft ist,
**dadurch gekennzeichnet, dass** es Mittel stromaufwärts der Client-Endgeräte aufweist zur Verwaltung zumindest einer Liste (6) eines jeden in dem mit einem der Client-Endgeräte verknüpften Cache-Speicher vorhandenen Objektes, um den Inhalt des Cache-Speichers betreffenden Informationsaustausch zwischen dem Client-Endgerät und dem Server zu begrenzen.

19. Datenserver für Objekte genannte Daten, der über zumindest ein Kommunikationsnetz mit zumindest einem Client-Endgerät verbunden ist, wobei zumindest ein Cache-Speicher, der zum Speichern zumindest einiger der von dem Server übertragenen Objekte ausgestaltet ist, mit zumindest einem der Client-Endgeräte innerhalb des Netzes verknüpft ist,
**dadurch gekennzeichnet, dass** er Mittel aufweist zur Verwaltung zumindest einer Liste eines jeden in dem mit einem der Client-Endgeräte verknüpften Cache-Speicher vorhandenen Objektes, um Informationsaustausch mit dem verknüpften Client-Endgerät für auf den Inhalt des Cache-Speichers bezogene Information zu begrenzen.

20. Client-Endgerät für einen Datenserver nach Anspruch 19,
**dadurch gekennzeichnet, dass** es Mittel aufweist zur Übertragung zumindest einer Einheit einer Aktualisierungsinformation zu dem Datenserver, um dem Datenserver eine Aktualisierung der repräsentativen Liste des mit dem Clint-Endgerät verknüpften Cache-Speichers zu ermöglichen.

## Claims

1. Method for transmitting data, called objects, through at least one communication network (4), between a server (3) and at least one client terminal (2), at least one cache memory (1) intended to store at least some of the said objects transmitted by the said server and being associated with at least one of the said client terminals within the said network,
**characterised in that** at least one list (6) of each of the objects present in the said cache memory (1) associated with one of the said client terminals is managed by the said server (3) or by an intermediate element of the said network, upstream of the said client terminals, in order to limit information exchanges related to the contents of the said cache memory between the said client terminal (2) and the said server (3).

2. Transmission method according to Claim 1,
**characterised in that**, within the said list (6), there is stored an identifier for each of the said objects and, for at least one of the said objects, reproduction information for the said object.

3. Transmission method according to Claim 2,
**characterised in that**, for at least one of the said objects, the said reproduction information relates to a refinement level for the said object.

4. Transmission method according to either of Claims 2 and 3, **characterised in that**, for each of the said objects stored in the said cache memory, the said list (6) includes a pair <O, L_{O}> comprising the said identifier O of the said object and the said reproduction information L_{O} of the said object.

5. Transmission method according to any one of Claims 1 to 4, **characterised in that**, for each of the said client terminals (2), at least one item of information about the said client terminal (2) and/or about a user of the said client terminal, called the display information, is associated with the said list (6), so as to form a context.

6. Transmission method according to Claim 5,
**characterised in that** the said display information belongs to the group including:
- position information of the said user;
- observation direction of the said user;
- selection parameters of the said objects.

7. Transmission method according to either of Claims 5 and 6, **characterised in that** it includes a preliminary initialisation phase involving, for each of the said client terminals (2), a first transmission step (71) in which initial display information is transmitted to the said server (3), and a storage step (72) in which the said server (3) stores the said initial display information in the said corresponding context.

8. Transmission method according to Claim 4,
**characterised in that** the said preliminary initialisation phase also includes a second transmission step (73) in which the said server (3) sends a coarse version of the scene to be reproduced by the said client terminal, to the client terminal (2).

9. Transmission method according to any one of Claims 5 to 8, **characterised in that** each of the said client terminals implements a step to transfer at least some of the said items of display information to the said server at predetermined time intervals and/or when the said display information is modified.

10. Transmission method according to Claim 9,
**characterised in that** the said predetermined time intervals are fixed by the said client terminal.

11. Transmission method according to Claim 10,
**characterised in that** the said predetermined time intervals depend on at least one characteristic of the said communication network.

12. Transmission method according to any one of Claims 9 to 11, **characterised in that** at the end of the said transfer step performed by the said client terminal, the said method implements a step (62) to update the said display information within the said corresponding context.

13. Transmission method according to Claim 12,
**characterised in that** at the end of the said update step, the said server implements the following steps:
- a determination step (63), as a function of at least some of the said updated display information, to determine at least one identifier object O needed by the said client terminal, and a corresponding reproduction level L_{O};
- a step (64) to analyse the said list representative of the said cache memory associated with the said client terminal, so as to identify any pairs <O, L_{O}>, corresponding to the said identifier object(s) O and reproduction level L_{O}, that are needed by the said client terminal and not stored in the said list;
- a step (65) to transmit to the said client terminal the said possible identifier object(s) O with reproduction level L_{O} which the said client terminal needs, corresponding to the said possible pair(s) <O, L_{O}> not stored in the said list;
- a step (66) to update the said list representative of the said cache memory associated with the said client terminal, adding to the said list the said pair(s) <0, L_{O}> corresponding to the said object(s), if any, sent to the said client terminal.

14. Transmission method according to Claim 13,
**characterised in that** the said server also implements:
- a step to determine at least one identifier object O and reproduction level L_{O} that may be needed by the said client terminal, according to at least one predetermined probability criterion;
- a step in which the said at least one identifier object O and reproduction level L_{O} is sent to the said client terminal in anticipation.

15. Transmission method according to either of Claims 13 and 14, **characterised in that** on reception (81) of at least one object sent by the said server, the said client terminal implements the following steps:
- if the fill rate of the said cache memory associated with the said client terminal is less than a predetermined threshold, a step (83) to store the said received object in the said cache memory;
- otherwise, a step (84) to evaluate a relevance criterion for the said received object:
• If at least one of the said objects stored in the said cache memory has a relevance criterion with a value less than that of the said relevance criterion of the said received object, the said client terminal implements a sub-step (86) to delete the said less relevant object from the said cache memory and a sub-step to store the said received object in the said cache memory;
• Otherwise, the said client terminal implements a sub-step (85) to reject the said received object.

16. Transmission method according to Claim 15,
**characterised in that** at the end of the said deletion sub-step and/or the said rejection sub-step, the said client terminal sends (87) to the said server at least one item of information concerning the update of the said cache memory associated with the said client terminal, so that the said server deletes from the said list representative of the said cache memory at least one pair <O, L_{O}> corresponding to the said object deleted during the said deletion sub-step, and/or to an object sent by the said server during the said transmission step, but not stored in the said cache memory.

17. Transmission method according to any one of Claims 1 to 16, **characterised in that** at least some of the said objects include at least one index, so as to be able to selectively transmit a portion of the said object starting from the said associated index.

18. System for transmitting data, called objects, through at least one communication network, between a server (3) and at least one client terminal (2), at least one cache memory (1) intended to store at least some of the said objects transmitted by the said server and being associated with at least one of the said client terminals within the said network,
**characterised in that** it includes means, upstream of the said client terminals, for managing at least one list (6) of each of the objects present in the said cache memory associated with one of the said client terminals, in order to limit information exchanges related to the contents of the said cache memory between the said client terminal and the said server.

19. Data server, for data called objects, connected through at least one communication network, to at least one client terminal, at least one cache memory intended to store at least some of the said objects transmitted by the said server and being associated with at least one of the said client terminals within the said network,
**characterised in that** it includes means for managing at least one list of each of the objects present in the said cache memory associated with at least one of the said client terminals, in order to limit information exchanges with the said associated client terminal, for information related to the contents of the said cache memory.

20. Client terminal for a data server according to Claim 19, **characterised in that** it includes means for transmitting at least one item of update information to the said server so as to enable the said server to update the said list representative of the said cache memory associated with the said terminal.
